## Europäisches Patentamt

## European Patent Office

## Office européen des brevets

(19)

(11) Veröffentlichungsnummer: **0 146 008 B1**

(12) # EUROPÄISCHE PATENTSCHRIFT

(45) Veröffentlichungstag der Patentschrift:
**11.05.88**

(51) Int. Cl.⁴: **H 02 K 9/06**

(21) Anmeldenummer: **84114174.0**

(22) Anmeldetag: **23.11.84**

(54) **Generator zum Betrieb auf Fahrzeugen, insbesondere als Drehstromgenerator ausgebildeter Generator, mit kraftschlüssig gekuppeltem Lüfterrad.**

(30) Priorität: **17.12.83 DE 3345761**

(43) Veröffentlichungstag der Anmeldung:
**26.06.85 Patentblatt 85/26**

(45) Bekanntmachung des Hinweises auf die Patenterteilung:
**11.05.88 Patentblatt 88/19**

(84) Benannte Vertragsstaaten:
**DE FR GB IT**

(56) Entgegenhaltungen:
**EP - A - 0 087 057**
**DE - B - 2 010 088**
**DE - C - 364 254**
**GB - A - 2 061 461**

(73) Patentinhaber: **ROBERT BOSCH GMBH, Postfach 50, D-7000 Stuttgart 1 (DE)**

(72) Erfinder: **Ragaly, Istvan, Dipl.-Ing., Hermann-Essig-Strasse 102, D-7141 Schwieberdingen (DE)**

## Beschreibung

Die Erfindung betrifft einen Generator zum Betrieb auf Fahrzeugen, vorzugsweise zum Antrieb durch eine Brennkraftmaschine über eine Riemenscheibe, die mit der Läuferwelle des Generators drehfest verbunden ist und das Lüfterrad des Generators über eine kraftschlüssige Kupplung antreibt.

Bei einem bekannten Generator dieser Art (DE-OS 29 42 737) sitzen zwei zur kraftschlüssigen Kupplung der Läuferwelle mit dem Lüfterrad dienende Kugellager nebeneinander auf der Läuferwelle, wobei ihre beiden Außenringe in der Bohrung einer an das Lüfterrad angegossenen Nabe so eingepaßt sind, daß der näher am Lagerschild des Generators liegende Außenring mit Preßsitz in der Nabe befestigt ist, während der Außenring des der Riemenscheibe näherliegenden Kugellagers in der Nabenbohrung bei unterschiedlichen Drehzahlen zwischen Läuferwelle und Lüftergrad gleiten kann. Es hat sich jedoch gezeigt, daß bei den für das Lüfterrad üblichen Gußwerkstoffen infolge der Gleitreibung das außenliegende Kugellager schon nach geringer Laufzeit sich in der Nabe lockert und zu unsicheren Mitnahmemomenten führt.

Der Erfindung liegt die Aufgabe zugrunde, für einen Generator der eingangs beschriebenen Art eine Kupplung zu schaffen, die eine hohe Lebensdauer hat und das ursprünglich eingestellte Mitnahmemoment beibehält. Zur Lösung dieser Aufgabe sind die im kennzeichnenden Teil des Anspruchs 1 angegebenen Maßnahmen vorgesehen.

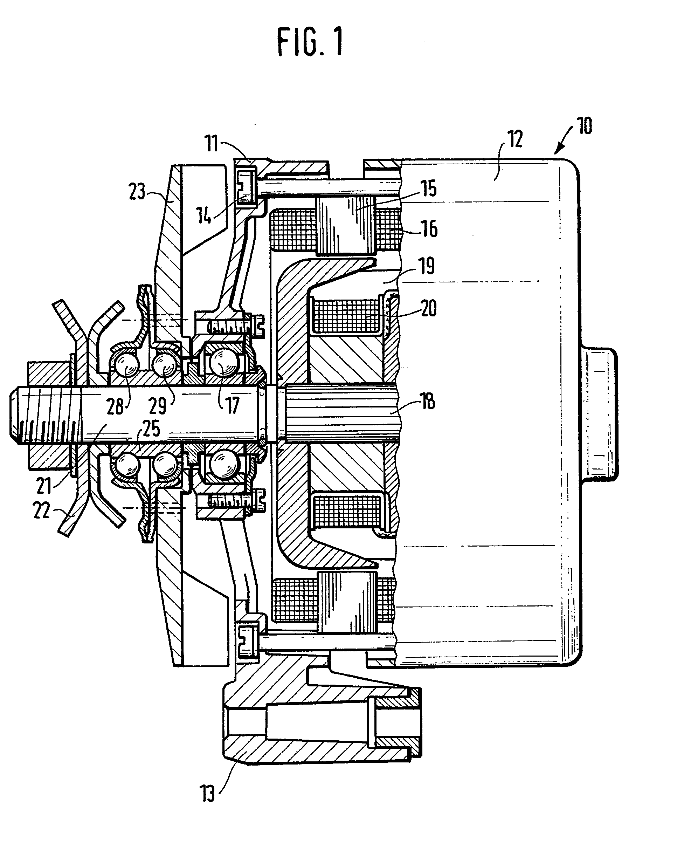

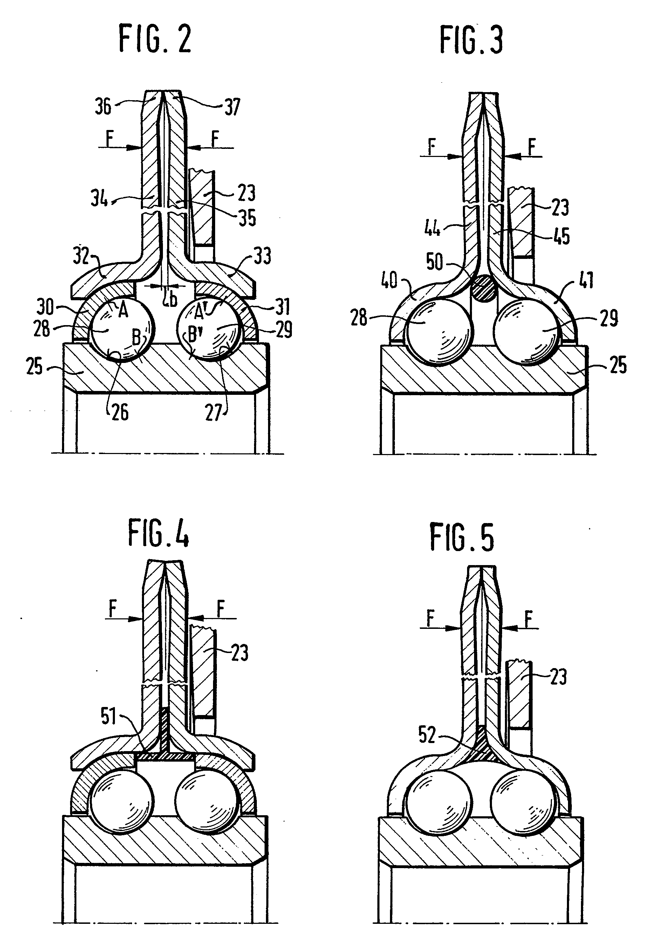

In der Zeichnung ist in Figur 1 ein erfindungsgemäßer Drehstromgenerator teilweise in seinem axialen Längsschnitt und teilweise in der Ansicht wiedergegeben. Die Figuren 2 bis 5 zeigen jeweils in axialem Halbschnitt verschiedene Ausführungsformen für die in Figur 1 nur schematisch angedeutete, drehzahlabhängige Kupplung des Generators, wobei die Riemenscheibe weggelassen und das Lüfterrad nur ausschnittsweise wiedergegeben ist.

Der in Figur 1 dargestellte Drehstromgenerator 10 hat ein antriebsseitiges Lagerschild 11 und ein schleifringseitiges Lagerschild 12. Am antriebsseitigen Lagerschild 11 ist ein Schwenkarm 13 angeformt. Mit Hilfe von Schrauben 14 ist ein Ständerblechpaket 15, das eine über seinen Umfang gleichmäßig verteilte Drehstromwicklung 16 trägt, zwischen den beiden Lagerschilden eingespannt. Im antriebsseitigen Lagerschild 11 sitzt ein Kugellager 17, das zusammen mit einem nicht dargestellten zweiten Kugellager, welches im antriebsfernen Lagerschild 12 sitzt, zur Lagerung der Läuferwelle 18 dient. Diese trägt im Inneren des Generatorgehäuses einen Klauenpolläufer 19 und eine von diesem umschlossene Erregerwicklung 20. Sie kann über eine Keilriemenscheibe 22, die auf dem aus dem Lagerschild 11 vorstehenden Wellenende 21 angeordnet ist, von einer nicht dargestellten Brennkraftmaschine angetrieben werden. Dicht am antriebsseitigen Lagerschild 11 ist auf dem Wellenende 21 ein Lüfterrad 23 vorgesehen, das aus dem Inneren des Generatorgehäuses Kühlluft ansaugt.

Zwischen dem Lüfterrad 23 und der Riemenscheibe 22 ist eine Mitnahmekupplung angeordnet, die nachstehend beschrieben ist.

Beim Ausführungsbeispiel der Mitnahmekupplung nach Figur 2 ist ebenso wie bei den übrigen Ausführungsbeispielen ein auf dem Endabschnitt 21 der Ankerwelle 18 festsitzender Kugellager-Innenring 25 vorgesehen, welcher einem serienmäßigen, normgerechten Innenring eines beispielsweise zweirilligen Pendel- oder Schrägkugellagers entspricht. Der Innenring 25 weist zwei in geringem axialen Abstand nebeneinander angeordnete Laufrillen 26 und 27 auf. In diesen laufen Kugel 28 und 29, welche radial nach außen durch je einen von zwei Lagerschalen 30 und 31 abgestützt sind. Jede der beiden Lagerschalen hat einen aus der Zeichnung erkennbaren ringsektorförmigen Querschnitt und ist an ihrer Umfangsfläche durch einen Preßsitz mit einer Nabe 32 bzw. 33 verbunden, welche die Innenzone einer tellerförmigen Federmembran 34 bzw. 35 bildet. Diese beiden Membranen haben an ihrer Randzone eine flache Abkröpfung 36 und 37 und sind gegeneinander durch eine in Höhe des Pfeiles F angeordnete Zugschraube miteinander verspannt und haben in verspanntem Zustand in der Nähe der Lagerschalen 30, 31 einen mit b bezeichneten Axialabstand. Unter dem Einfluß der Spannkraft F werden die beiden Kugellagerreihen 28 und 29 so gegeneinander verspannt, daß sie bei ihrer Umlaufbewegung in den mit A, B bzw. A', B' angedeuteten Kegelflächen abrollen, wobei ein von der Größe der Vorspannung F abhängiges Mitnahmemoment zwischen der Ankerwelle und dem Innenring 25 einerseits und den beiden Membranen andererseits bzw. dem mit den Membranen verbundenen Lüfterrad 23 erzeugt wird. Mit steigender Drehzahl steigt das Widerstandsmoment des Lüfterrades 23 etwa mit der zweiten Potenz der Drehzahl an und erreicht deshalb im mittleren Antriebsdrehzahlbereich bereits einen Wert, über welchen die Drehzahl des Lüfters nur noch sehr wenig ansteigen kann. Die beiden Federmembranen 34 und 35 sind einschließlich ihrer Naben 32 und 33 zueinander spiegelbildlich angeordnet und formgerecht zueinander ausgebildet. Daher ergibt sich nicht nur der Vorteil geringer Herstellungs- und Montagekosten, sondern auch die Möglichkeit einer geringen Lagerhaltung.

Bei der in Figur 3 dargestellten Ausführungsform sind die beiden Lagerschalen 40 und 41, welche die Kugeln 28 und 29 umgreifen, unmittelbar an die Federmembranen 44 und 45 angeformt, wobei diese Lagerschalen zur Verbesserung der Abdichtung gegenüber Schmierstoffen bis nahe an den gemeinsamen Innenring 25 herangeführt sind.

Beim Ausführungsbeispiel nach Figur 3 ist zwischen den beiden Schalen 40 und 41 ein aus elastischem Werkstoff oder aus Filz hergestellter Dichtring 50 vorgesehen, der verhindert, daß das in der Zeichnung nicht angedeutete, für die Kugeln vorgesehene Schmiermittel nach außen abgeschleudert werden kann.

Dem gleichen Zweck dient beim Ausführungsbeispiel nach Figur 4, das im übrigen weitgehend demjenigen nach Figur 2 entspricht, eine im Querschnitt T-förmige Dichtlippe 51, die wie beim Ausführungsbeispiel nach Figur 5 durch eine beispielsweise einvulkanisierte Dichtringanordnung 52 ersetzt werden kann.

Der besondere Vorteil der erfindungsgemäß gestalteten Kupplung besteht darin, daß kein Schiebesitz erforderlich ist und demzufolge eine hohe Lebensdauer gewährleistet wird, daß weiterhin eine ideale Wärmeabfuhr von den durch Reibung beanspruchten Lagerschalen zum Lüfterrad 23 erfolgt, daß das Bauvolumen kleiner werden kann, daß ferner nur geringe Toleranzen eingehalten werden müssen, wobei die Lagerschalen und ihre Federmembranen in einer Vormontage zu einem kompakten Bauteil verbunden werden können.

## Patentansprüche

1. Generator (10) zum Betrieb auf Fahrzeugen, insbesondere als Drehstromgenerator ausgebildeter Generator, mit kraftschlüssig gekuppeltem Lüfterrad (23) und mit einer zwischen der Läuferwelle (18) des Generators und dem Lüfterrad angeordneten drehzahlabhängigen Kupplung, zu der zwei in axialem Abstand nebeneinander angeordnete Reihen von Kugen (28, 29) gehören, dadurch gekennzeichnet, daß die Kugeln längs der Welle in zwei nebeneinander angeordneten Laufrillen (26, 27) laufen und radial nach außen durch zwei, welche in ihrem durch die Läuferwellenachse geführten Querschnitt mindestens einen Viertelkreis ausmachen, welche Lagerschalen (30, 31) umfassen, und welche durch zwei gegeneinander verspannte und mit dem Lüfterrad fest verbundene tellerförmige Federmembranen (36, 37) axial gegeneinander verspannt sind.

2. Generator nach Anspruch 1, dadurch gekennzeichnet, daß die Lagerschalen einstückig mit den Membranen (44, 45) verbunden sind.

3. Generator nach Anspruch 2, dadurch gekennzeichnet, daß die Lagerschalen bis dicht an den Innenring (25) heranreichen.

4. Generator nach einem der Ansprüche 1 bis 3, dadurch gekennzeichnet, daß zwischen den Lagerschalen (30, 31 bzw. 40, 41) ein Dichtring (50, 51, 52) angeordnet ist.

## Claims

1. Generator (10) for operation on vehicles, especially a generator designed as a three-phase generator, with a non-positively coupled impeller (23) and with a speed-dependent coupling which is arranged between the rotor shaft (18) of the generator and the impeller and which includes two rows of balls (28, 29) arranged next to and at an axial distance from one another, characterized in that the balls run along the shaft in two running grooves (26, 27) arranged next to one another and are surrounded radially relative to the outside by two bearing shells (30, 31) which, in their cross-section taken through the axis of the rotor shaft, make up at least a quarter circle and which are braced axially relative to one another by means of two mutually braced plate-shaped spring diaphragms (36, 37) connected firmly to the impeller.

2. Generator according to Claim 1, characterized in that the bearing shells are connected integrally to the diaphragms (44, 45).

3. Generator according to Claim 2, characterized in that the bearing shells reach close up to the inner ring (25).

4. Generator according to one of claims 1 to 3, characterized in that s sealing ring (50, 51, 52) is arranged between the bearing shells (30, 31 or 40, 41).

## Revendications

1. Générateur (10) pour le service sur véhicules, en particulier générateur sous la forme d'un alternateur triphasé, comprenant une roue de ventilateur (23) accouplée à une force et un accouplement dépendant de la vitesse de rotation disposé entre l'arbre de rotor (18) du générateur et la roue de ventilateur, auquel appartiennent deux rangées de billes (28, 29) disposées l'une à côté de l'autre à une distance axiale, caractérisé en ce que les billes se déplacent le long de l'arbre, dans deux gorges de roulement (26, 27) disposées l'une à côté de l'autre et sont entourées radialement vers l'extérieur par deux coussinets en coquilles (30, 31) qui font au moins un quart de cercle dans leur section guidée par l'axe de l'arbre de rotor et qui sont serrées axialement l'une contre l'autre par deux membranes élastiques (36, 37) en forme de disque, qui sont serrées l'une contre l'autre et reliée rigidement avec la roue de ventilateur.

2. Générateur selon la revendication 1, caractérisé en ce que les coussinets en coquilles sont reliés en une seule pièce par les membranes (44, 45).

3. Générateur selon la revendication 2, caractérisé en ce que les coussinets en coquilles arrivent hermétiquement jusqu'à la bague intérieure (25).

4. Générateur selon l'une quelconque des revendications 1 à 3, caractérisé en ce qu'une bague d'étanchéité (50, 51, 52) est disposée entre les coussinets en coquilles (30, 31 respectivement 40, 41).

# FIG. 1

# FIG. 2

# FIG.3

# FIG.4

# FIG.5